# EUROPEAN PATENT APPLICATION

(11) **EP 1 816 699 A1**
(43) Date of publication of application: **08.08.2007**
(21) Application number: 06121447.4
(22) Date of filing: 28.09.2006
(51) Int. Cl.: H01M 10/04, H01M 10/14, H01M 10/28

(54) **Secondary battery**

(30) Priority: 07.02.2006 JP 2006029204
(71) Applicant: HITACHI VEHICLE ENERGY, LTD., Hitachinaka-shi 312-8505 Ibaraki (JP)
(72) Inventor: Kojima, Tooru, Saitama 366-0801 (JP); Ishizu, Takenori, Saitama 367-0044 (JP)
(74) Representative: Viering, Jentschura & Partner

(57) **Abstract**

A secondary battery having an excellent capacity maintenance factor or charging/discharging efficiency is provided. A lithium-ion battery comprises an electrode group that a positive electrode and a negative electrode which respective of active materials for the positive and negative electrodes is coated on both surfaces of a collectingmember. An area S1 of a portion of the negative electrode 7 not facing the positive electrode 6 is set to be not more than 10% of an area S2 of a portion of the negative electrode 7 facing the positive electrode 6. An influence that the portion not facing the positive electrode affects a battery reaction is controlled, and the decrease in the capacity maintenance factor or the charging/discharging efficiency according to cycling use can be depressed.

## Description

### FIEID OF THE INVENTION

The present invention relates to a secondary battery, and in particular relates to a secondary battery comprising an electrode group that a positive electrode and a negative electrode which respective of active materials for the positive and negative electrodes is coated on both surfaces of a collecting member or is filled into the collecting member are placed via a separator.

### DESCRIPTON OF THE RELATED ART

In many of batteries, generally, a positive electrode active material and a negative electrode active material are placed respectively on both surfaces of a collecting member, and these are layered or wound via a separator such as a microporous membrane so as not to occur short-cut to constitute a battery. For example, in lead batteries, a layered structure that positive and negative electrodes are layered via separators is employed. As types for filling or packing the active material to the collecting member, a clad type and a paste type are used mainly. In the clad type, the active material is filled to a punching metal that a plurality of protruded portions is formed at a rod shaped metal bar. In the paste type, the active material is filled to a grid-like collecting member. On the other hand, in a non-aqueous electrolyte secondary battery such as a lithium-ion battery or the like, a layered structure that positive and negative electrodes are layered via separators or a winding structure that positive and negative electrodes are wound via separators is employed, and the active material is coated on both surfaces of a metal foil serving as a collecting member and having a thickness of approximately 10 micro meters to several 10 micro meters.

In this manner, in an ordinary secondary battery, because the active material is provided on both surfaces of the collecting member of an electrode which is disposed at an outermost position, a portion not facing an opposite electrode appears. This portion does not contribute to a relatively rapid chemical reaction since it does not face the opposite electrode. However, a chemical reaction advances slowly at this portion due to cataphoresis and the like of chemical species in accordance with charging and discharging of the battery. Japanese Patent No. 2600214 discloses a technique for setting the sizes of positive and negative electrodes with respect to the portion facing the opposite electrode.

In a secondary battery, when an electric capacity of the not facing portion is large to some degree against an electric capacity of the facing portion, regardless of the above-stated layered or winding structure, there is a case that an originally designed battery capacity or charging/discharging efficiency can not be obtained, mainly because chemical species involved with a chemical reaction is absorbed or adhered to the not facing portion. This causes mainly due to a lack in density of the chemical species to be involved with charging/discharging at the facing portion. Especially, in a case that an irreversible capacity exists at one side of electrodes like an ordinary non-aqueous electrolyte secondary battery in which a carbon material is used for a negative electrode, a disadvantage that a battery capacity decreases or a charging/discharging efficiency lowers appears remarkably because the carbon material irreversibly absorbs the reaction chemical species of the positive electrode. As stated above, the technology for setting the sizes of the positive and negative electrodes with respect to the portion facing the opposite electrode is known. However, as longas Inventors conducted searches, a technology for setting a relation between the not facing portion and the facing portion has not been found.

### SUMMARY OF THE INVENTION

In view of the above circumstances, an object of the present invention is to provide a secondary battery having an excellent capacity maintenance factor or charging/discharging efficiency by setting capacities of a portion not facing an opposite electrode and a portion facing the opposite electrode.

In order to achieve the above object, the present invention is directed to a secondary battery comprising an electrode group that a positive electrode and a negative electrode which respective of active materials for the positive and negative electrodes is coated on both surfaces of a collectingmember or is filled into the collecting member are placed via a separator, wherein, with respect to an electrode having a polarity placed at an outside of the electrode group, an area S1 or a capacity C1 of a portion not facing an electrode having an opposite polarity is set to be not more than 10% of an area S2 or a capacity C2 of a portion facing the electrode having the opposite polarity (S1/S2<=10% or C1/C2<=10%).

With respect to the electrode having a polarity placed at the outside of the electrode group, the portion not facing the electrode having an opposite polarity affects a battery reaction in a case that a capacity of the portion not facing the electrode having the opposite polarity is large to a full capacity of the battery. Accordingly, by setting the capacity of the portion not facing the electrode having the opposite polarity to be not more than 10% of the capacity of the portion facing the electrode having the opposite polarity, a battery performance regarding a capacity maintenance factor or a charging/discharging efficiency according to cycling use can be secured with no problems in practical use. The battery capacity is defined, when battery voltage is changed between an upper limit and a lower limit of operating voltage, as an electric capacity in a case that electric potential corresponding to respective of the positive and negative electrodes is changed.

It is preferable in the present invention that the area S1 or the capacity C1 of the portion not facing the opposite electrode is set to be not more than 5% of the area S2 or the capacity C2 of the portion facing the opposite electrode. (S1/S2<=5% or C1/C2<=5%).

According to the present invention, since the capacity of the portion not facing the electrode having the opposite polarity is set to be not more than 10% of the capacity of the portion facing the electrode having the opposite polarity, an influence that the capacity of the portion not facing the electrode having the opposite polarity affects a battery reaction is controlled. Accordingly, an effect is obtained that a decrease in a battery performance regarding a capacity maintenance factor or a charging/discharging efficiency according to cycling use can be depressed.

### BRIEF DESCRIPTION OF THE DRAWINGS

Fig. 1 is a schematic perspective view of a lithium-ion battery of an embodiment to which the present invention is applicable;
Fig. 2 is a schematic perspective view of an electrode group of the lithium-ion battery of the embodiment;
Fig. 3 is a sectional view of the electrode group schematically showing a layered state of a positive electrode, a negative electrode and a separator; and
Fig. 4 is a graph showing test results of a charging/discharging cycling test on batteries of examples and a control.

### DETAILED DESCRIPTION OF THE PREFERRED EMBODIMENTS

With reference to the drawings, an embodiment in which the present invention is applied to a lithium-ion battery as a battery system will be explained below.

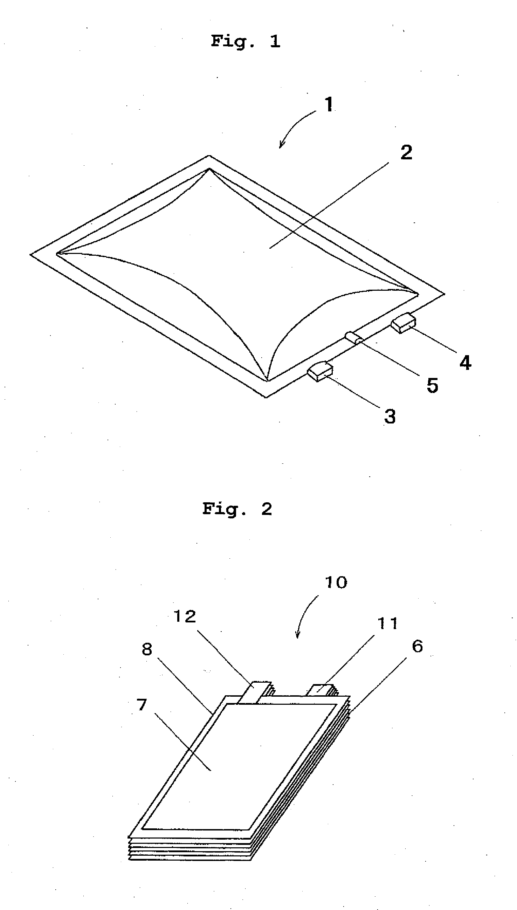

As shown in Fig. 1, a lithium-ion battery 1 of this embodiment has an electrode group 10 (See Fig. 2.) as an element for electric power generation, a non-aqueous electrolyte (unillustrated) and an approximately plate-shaped package laminate 2 (container) in which these are accommodated.

Outside edges of a convex laminate film disposed at an upper side and a flat laminate film disposed at a lower side are sealed by thermal melting to form the package laminate 2, whereby a sealed structure is employed for the lithium-ion battery 1. For example, for such a laminate film, a three-layer structure film made of nylon film/aluminum foil/polypropylene film can be used. A positive electrode terminal 3 and a negative electrode terminal 4 are led out of one side among peripheral sides of the lithium-ion battery 1, and these terminals are inserted between two sheets of the laminate film. Further, an pouring opening 5 for pouring (injecting) the non-aqueous electrolyte is formed between the positive electrode terminal 3 and the negative electrode terminal 4, and the pouring opening 5 is sealed by thermal melting after pouring the non-aqueous electrolyte therethrough.

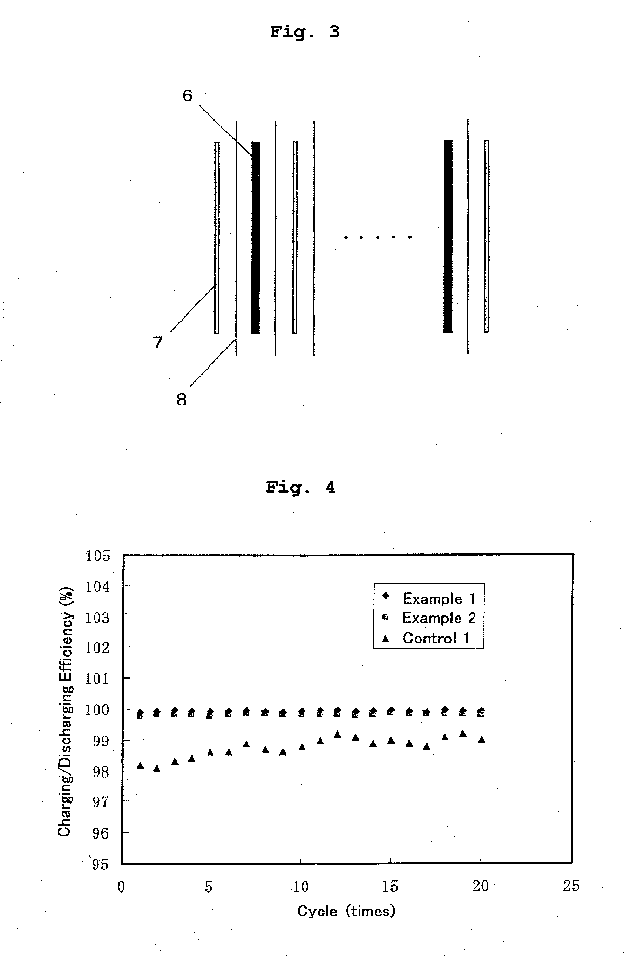

As shown in Fig. 2 and Fig. 3, the electrode group 10 accommodated into the package laminate 2 is constituted that a predetermined number of positive electrodes 6 and negative electrodes 7 are layered alternatively via microporous separators 8 made of polythene. In this embodiment, because the negative electrode 7 is placed at an outside of the electrode group 10, the number of the negative electrodes 7 is larger than that of the positive electrode 6 by one.

A lithium- transitionmetal complex oxide and powder of carbon are mixed uniformly together with a binder and viscosity thereof is controlled by solvent to produce slurry for a positive electrode mixture. The positive electrode 6 is obtained by coating the slurry thus produced uniformly on both surfaces of an aluminum foil (positive electrode collecting member) having a thickness of 20 micro meters, then by drying and pressing it to a predetermined thickness. A positive electrode lead piece 11 on which the slurry is not coated is formed at the aluminum foil to collect electricity. In this embodiment, the aluminum foil is notched to form the positive electrode lead piece 11 because the foil is thin. Incidentally, each positive electrode lead piece 11 is connected to the above-stated positive electrode terminal 3.

Powder of a carbon material which can occlude and uncouple (release) lithium-ions reversibly such as graphite or the like and a binder are mixed uniformly and viscosity thereof is controlled by solvent to produce slurry for a negative electrode mixture. The negative electrode 7 is obtained by coating the slurry thus produced uniformly on both surfaces of an rolled copper foil (negative electrode collecting member) having a thickness of 10 micro meters, then by drying and pressing it to a predetermined thickness. A negative electrode lead piece 12 on which the slurry is not coated is formed on the copper foil to collect electricity in the same manner as the positive electrode. Incidentally, each negative electrode lead piece 12 is connected to the above-stated negative electrode terminal 4.

In order to make explanation simple, in this embodiment, an area of each positive electrode 6 and each negative electrode 7 which constitute the electrode group 10 is the same, and a ratio of electric capacities per unit area of the positive electrode 6 and the negative electrode 7 is designed to be 1:1. Further, an area S1 of a portion of the negative electrode 7 not facing the positive electrode 6 is set to be not more than 10% of an area S2 of a portion of the negative electrode 7 facing the positive electrode 6. Incidentally, because the electric capacity per unit area of the positive electrode 6 and the electric capacity per unit area of the negative electrode 7 are designed to be 1:1, a ratio of a capacity C1 of the portion of the negative electrode 7 not facing the positive electrode 6 and a capacity C2 of the portion of the negative electrode 7 facing the positive electrode 6 is the same as the ratio of the above-stated areas.

A lithium hexafluorophosphate (LiPF₆), dissolved at 1 mole/liter into, for example, mixed solvent of ethylene carbonate (EC), dimethyl carbonate (DMC) and diethyl carbonate (DEC) at a volume ratio of 1:1:1, can be used for the non-aqueous electrolyte.

Next, lithium-ion batteries of Examples manufactured according to the above embodiment will be explained. Incidentally, a lithium-ion battery of Control (Comparative Example) manufactured for making a comparison with the batteries of Examples will be also explained.

The battery of Example 1 was manufactured by layering alternatively 20 pieces of the positive electrode and 21 pieces of the negative electrode. The battery of Example 2 was manufactured by layering alternatively 10 pieces of the positive electrode and 11 pieces of the negative electrode. The battery of Control 1 was manufactured by layering alternatively 5 pieces of the positive electrodeand6piecesofthenegativeelectrode. A ratio S1/S2 (ratio C1/C2) of the area S1 (capacity C1) of the portion of the negative electrode not facing the positive electrode to the area S2 (capacity C2) of the portion of the negative electrode facing the positive electrode is, 5% in Example 1, 10% in Example 2 and 20% in Control 1, respectively.

A charging/discharging cycling test of 20 cycles was carried out by using thus manufactured batteries of Example 1, Example 2 and Control 1. The test conditions were as follows:
Charging: 4.2V constant current-constant voltage charging; current value: 0.2C (5 hour rate); final (cut-off) hour: 8 hours
Discharging:0.2C(5hour rate)constant current discharging; final voltage: 3.0V
Incidentally, prior to this cycling test, preliminary charging/discharging of 5 cycles was carried out to saturate an irreversible capacity between the positive and negative electrodes.
The conditions were the same as the above charging/discharging rate, but a charging final capacity was set to be approximately 50% of full capacity in the first and second cycles and was set to be 100% of full capacity in the third to fifth cycles.

The transition of a charging/discharging efficiency in the charging/discharging cycling test is shown in Fig. 4. Each of batteries of Examples 1 and 2 maintains a high charging/discharging efficiency. However, the battery of Control 1 showed a lower charging/discharging efficiency comparing with those of Examples 1 and 2. This is because the portion of the negative electrode not facing the positive electrode occludes lithium-ions uncoupled out of the positive electrode at a time of charging, and because a discharging capacity becomes lower comparing with a charging capacity since lithium-ions occluded into this portion take an reversible movement with a very slow speed comparing with the portion facing the positive electrode. This may happen to batteries of Examples. However, it can be maintained at a negligible level in practical use by setting the area of the portion not facing the positive electrode to be not more than a predetermined scope. Incidentally, the battery of Example 1 showed a better test result than that of Example 2 although it was small.

As stated above, in the lithium-ion battery 1 of this embodiment, since the area or capacity of the portion of the negative electrode 7 not facing the positive electrode 6 is set to be no more than 10% of the area or capacity of the portion of the negative electrode 7 facing the positive electrode 6, an influence that the portion not facing the positive electrode affects a battery reaction is controlled (restricted), and the decrease in the capacity maintenance factor or the charging/discharging efficiency according to cycling use can be depressed.

Incidentally, in this embodiment, the lithium-ion battery in which the positive and negative electrodes are layered via the separator was shown, however, the present invention is not limited to this. For example, the present invention can be applied to a secondary battery having other battery system such as a lead-acid battery or having a winding structure. In that case, it is easiest to obtain a secondary battery to which the present invention conforms by setting the above ratio S1/S2 (ratio C1/C2) for a coating amount and the number of layered pieces in the battery having the electrode group of the layered structure or for a coating amount and the number of winding turns in the battery having the winding structure to be not more than 10%.

While, there is a case that it is effective in view of securing a capacity or safety to design areas of facing positive and negative electrodes different depending on a battery system. Even in such a case, it is preferable to design to set the area or capacity of the portion not facing the opposite electrode to the area or capacity of the portion facing the opposite electrode to be within the above scope. In a case that the coating amount and the number of layered pieces or winding turns are out of the above scope due to a battery structure or other restricted conditions, it is effective that a mixture of the portion of the electrode not facing the opposite electrode may be peeled off or a surface of the electrode may be covered (masked) so as the portion not to infiltrated into an electrolyte. However, it should also be evaluated in view of assembling man-hour efficiency, cost, quality stability or the like in this case.

Because the present invention provides the secondary battery having an excellent capacity maintenance factor or charging/discharging efficiency, it contributes to manufacturing and/or marketing the secondary battery. Accordingly, the present invention has industrial applicability.

## Claims

1. A secondary battery comprising an electrode group that a positive electrode and a negative electrode which respective of active materials for the positive and negative electrodes is coated on both surfaces of a collecting member or is filled into the collecting member are placed via a separator, wherein, with respect to an electrode having a polarity placed at an outside of the electrode group, an area S1 or a capacity C1 of a portion not facing an electrode having an opposite polarity is set to be not more than 10% of an area S2 or a capacity C2 of a portion facing the electrode having the opposite polarity (S1/S2<=10% or C1/C2<=10%).

2. A secondary battery according to claim 1, wherein the area S1 or the capacity C1 of the portion not facing the opposite electrode is set to be not more than 5% of the area S2 or the capacity C2 of the portion facing the opposite electrode (S1/S2<=5% or C1/C2<=5%).

3. A secondary battery according to claim 1, wherein a ratio of electric capacities per unit area of the positive electrode and the negative electrode is 1:1.

4. A secondary battery according to claim 1, wherein the electrode group is constituted that the positive electrode and the negative electrode are layered via the separator alternately.

5. A secondary battery according to claim 4, wherein the electrode group is infiltrated into an electrolyte and is sealed within a container.

6. A secondary battery according to claim 4, wherein the positive electrode active material is a lithium manganese complex oxide and the negative electrode active material is a carbon material.

7. A secondary battery according to claim 6, wherein the positive electrode is formed that a mixture including the lithium manganese complex oxide is coated on both surfaces of an aluminum foil and the negative electrode is formed that a mixture including the carbon material is coated on both surfaces of a rolled copper foil.

8. A secondary battery according to claim 5, wherein the electrode group is infiltrated into a non-aqueous electrolyte and is sealed by a container made of laminated film.

9. A secondary battery according to claim 8, wherein a positive electrode terminal and a negative electrode terminal are led out of one side among peripheral sides of the container.

10. A secondary battery according to claim 9, wherein the container has an electrolyte pouring opening which is sealed by thermal melting.
